# EUROPÄISCHE PATENTSCHRIFT

(11) **EP 2 956 338 B1**
(45) Veröffentlichungstag und Bekanntmachung des Hinweises auf die Patenterteilung: **29.03.2017**
(21) Anmeldenummer: 14703874.9
(22) Anmeldetag: 12.02.2014
(51) Int. Cl.: B60R 21/203

(54) **VORRICHTUNG ZUR DÄMPFUNG VON SCHWINGUNGEN EINES AIRBAGS ODER EINER AIRBAGEINRICHTUNG**
DEVICE FOR DAMPING VIBRATIONS OF AN AIRBAG OR AN AIRBAG APPARATUS
DISPOSITIF D'AMORTISSEMENT DES VIBRATIONS D'UN COUSSIN DE SÉCURITÉ GONFLABLE OU D'UN SYSTÈME DE COUSSIN DE SÉCURITÉ GONFLABLE

(30) Priorität: 15.02.2013 DE 102013002557
(43) Veröffentlichungstag der Anmeldung: 23.12.2015
(73) Patentinhaber: Autoliv Development AB, 447 83 Vårgårda (SE)
(72) Erfinder: ANDERSSON, Stefan, 44196 Alingsås (SE)
(74) Vertreter: Stornebel, Kai
(86) Internationale Anmeldenummer: PCT/EP2014/052701
(87) Internationale Veröffentlichungsnummer: WO 2014/124954

(56) Entgegenhaltungen:
- EP-A1- 1 671 854
- EP-A1- 2 085 290
- JP-A- 2012 056 461
- US-A1- 2011 120 258

## Beschreibung

Die Erfindung betrifft eine Vorrichtung zur Dämpfung von Schwingungen eines Airbags oder Airbageinrichtung mit einer Halteeinrichtung zur Befestigung des Airbags oder der Airbageinrichtung an einem Träger, wobei die Halteeinrichtung entgegen einer Federkraft verlagerbar an dem Träger festlegbar ist und zwischen der Halteeinrichtung und dem Träger eine Dämpfereinrichtung angeordnet werden kann, wobei die Halteeinrichtung an einer an dem Träger festlegbaren Führungsbuchse geführt ist und die Führungsbuchse gedämpft an dem Träger gelagert werden kann.

Ähnliche Vorrichtungen sind aus der EP 2 085 290 A1, die dem Oberbegriff des Anspruchs 1 entspricht der JP 2012-056461 A und der US 2011/120258 A1 bekannt.
Die DE 39 25 761 A1 zeigt eine Vibrationsunterdrückungsvorrichtung für ein Lenkrad mit einem Luftsack, der einen Gasgenerator und einen Sack aufweist. Die Luftsackeinheit oder ein Teil davon ist durch ein elastisches Mittel an dem Lenkradkörper angebracht. Dadurch können Vibrationen des Lenkrades ohne ein zusätzliches Dämpfungsgewicht unterdrückt werden. Das elastische Mittel kann eine Manschette aufweisen, die durch ein Befestigungsmittel, beispielsweise eine Schraube, an einem über die Manschette angepassten rohrförmigen elastischen Teil befestigt ist.
Die DE 196 53 684 A1 betrifft eine Anordnung zur Befestigung einer Airbageinheit an einem Lenkrad, wobei mindestens eine Befestigungsstelle zur schwimmenden Lagerung der Airbageinheit vorgesehen ist. Die schwimmende Lagerung wird durch eine elastisch verformbare Buchse erreicht, die auf einer Befestigungsschraube angeordnet ist und an dieser zumindest teilweise anliegt.

Aufgabe der vorliegenden Erfindung ist es, eine verbesserte Vorrichtung bereitzustellen, mit der eine einfache Relativbewegung bei gleichzeitiger leichter Anpassbarkeit an unterschiedliche Einsatzzwecke ermöglicht ist.

Erfindungsgemäß wird diese Aufgabe durch eine Vorrichtung mit den Merkmalen des Hauptanspruches gelöst. Vorteilhafte Ausgestaltungen und Weiterbildungen der Erfindung sind in den Unteransprüchen, der Beschreibung und den Figuren aufgeführt.

Dadurch ist es möglich, die Halteeinrichtung im Hinblick auf einen Gleitreibungskoeffizienten oder anderer mechanischer Eigenschaften einfach durch eine Veränderung der Führungsbuchse anzupassen und darüber hinaus die Schwingungsdämpfungseigenschaften der Vorrichtung unabhängig von der Halteeinrichtung auszugestalten. Die Führungsbuchse kann elektrisch isolierend ausgebildet sein, um das Befestigungselement auch als Durchkontaktierung für einen Hupenschalter benutzen zu können.

Die Führungsbuchse kann Formschlusselemente an ihrem äußeren Umfang aufweisen, in denen eine Dämpfungsbuchse formschlüssig gehalten ist. Die Dämpfungsbuchse dämpft Relativbewegungen zwischen der Airbageinrichtung und dem Träger, die Ausführung in Gestalt einer Buchse hat den Vorteil der leichten Anpassbarkeit sowie einer Axial- und Radialdämpfung.

Die Dämpfungsbuchse kann an ihrem Außenumfang zumindest eine Aufnahmeeinrichtung zur formschlüssigen Festlegung des Trägers aufweisen, insbesondere in Gestalt einer außen umlaufenden Nut, so dass der Träger formschlüssig in der Aufnahmebuchse gelagert sein kann.

Zwischen der Führungsbuchse und der Dämpfungsbuchse kann zumindest ein elektrisch isolierendes Element angeordnet sein, wodurch sichergestellt ist, dass keine ungewollte Stromdurchleitung erfolgt.

Das elektrisch isolierende Element und die Dämpfungsbuchse können formschlüssig in Radialrichtung und/oder in Umfangsrichtung miteinander über Formschlusselemente gekoppelt sein, so dass eine Verdrehung oder eine ungewollte Relativbewegung in Radialrichtung nicht möglich sind.

Zwischen dem Träger und der Dämpfungsbuchse kann erfindungsgemäß eine an dem Träger befestigte, insbesondere angespritzte Ummantelung angeordnet sein, die einerseits elektrisch isolierend und andererseits schwingungsdämpfend ausgebildet sein kann.

Eine Feder kann zwischen dem Träger und der Halteeinrichtung angeordnet sein, die sich nicht auf der Führungsbuchse oder den schwingungsdämpfenden Elementen abstützt, um eine Entkopplung der Krafteinleitung von den schwingungsdämpfenden Komponenten zu erreichen.

Die Halteeinrichtung kann eine Gleitbuchse mit einem Innengewinde und einem Bolzen aufweisen, um eine Relativbewegung des Bolzens innerhalb der Gleitbuchse zu ermöglichen. Der Bolzen selbst ist dann an dem Träger befestigt.

An der Vorrichtung kann ein in Verlagerungsrichtung der Halteeinrichtung wirksamer Anschlag vorgesehen sein, um eine Bewegungsbegrenzung zu bewirken. Der Anschlag kann als separates Element ausgebildet sein.

Der Träger für die Airbageinheit ist vorzugsweise als ein Lenkrad ausgebildet.

Nachfolgend werden Ausführungsbeispiele der Erfindung anhand der beigefügten Figuren näher erläutert. Es zeigen:
- Figur 1: - eine Schnittdarstellung einer ersten Ausführungsform;
- Figur 2: - eine schematische Schnittdarstellung einer Variante,
- Figur 3: - Einzeldarstellungen von Komponenten und eine Schnittdarstellung im zusammengebauten Zustand;
- Figur 4: - eine Schnittdarstellung mit einem oberseitigen Anschlag; sowie
- Figur 5: - eine Schnittdarstellung mit einem unterseitigen Anschlag.

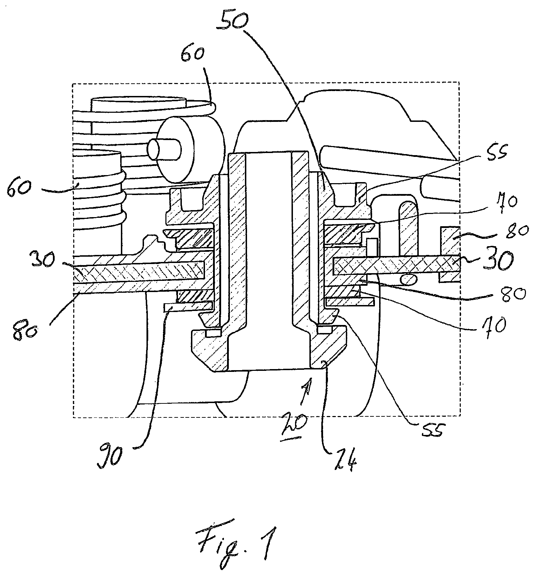

Figur 1 zeigt in einer schematischen Schnittdarstellung eine Vorrichtung zur Dämpfung von Schwingungen eines nicht dargestellten Airbags oder einer Airbageinrichtung mit einer Halteeinrichtung 20, von der eine Gleitbuchse 24 zur Aufnahme der Airbageinheit dargestellt ist. Die Airbageinheit wird über einen nicht dargestellten Bolzen an dem oberen Ende der Gleitbuchse 24 befestigt und kann entlang der Längserstreckung der Gleitbuchse 24 verlagert werden.

Die Gleitbuchse 24 ist in einer Führungsbuchse 50 verschieblich gelagert, die wiederum an ihren oberen und unteren Enden Formschlusselemente 55 in Gestalt von Vorsprüngen aufweist, um eine Verlagerung der Führungsbuchse 50 in Axialrichtung, also in der Figur 1 nach oben oder unten, zu vermeiden. Innerhalb der durch die Formschlusselemente 55 gebildeten Nut ist eine Dämpfungsbuchse 70 angeordnet, die im dargestellten Ausführungsbeispiel in Umfangsrichtung relativ zu der Führungsbuchse 50 festgelegt ist, also eine Verdrehung um die Längsachse nicht zulässt. Die Dämpfungsbuchse 70 dient zur Aufnahme von Schwingungen, insbesondere in Axialrichtung, kann aber auch Radialkomponenten oder Schwingungen in Umfangsrichtung aufnehmen. In der Dämpfungsbuchse 70 sind Aufnahmeeinrichtungen zur Aufnahme eines Trägers 30 vorgesehen, beispielsweise in Gestalt von Ausnehmungen, einer Nut oder dergleichen. Der Träger 30, an dem letztendlich der Airbag oder die Airbageinrichtung gelagert ist, ist im dargestellten Ausführungsbeispiel von einer Ummantelung 80 umgeben, die ebenfalls stoßdämpfende Wirkung haben und aus einem Kunststoff, insbesondere Schaumstoff, ausgebildet sein kann. Die Ummantelung 80 kann neben einer mechanischen Dämpfungseigenschaft auch eine elektrische Isolierung bewirken. Unterhalb der Dämpfungsbuchse 70 ist ein Isolierelement 90 angeordnet, um eine weitere elektrische Isolierung der Halteeinrichtung 20 zu bewirken. Ein korrespondierend ausgebildetes elektrisches Isolierelement 90 kann oberhalb der Dämpfungsbuchse 70 angeordnet sein und die Dämpfungsbuchse 70 elektrisch gegenüber der Führungsbuchse 50 isolieren.

Außerhalb der Halteeinrichtung 20 und der Führungsbuchse 50 und der Dämpfungsbuchse 70 sind Federn 60 an dem Träger 30 angeordnet, die eine Abstützung der Airbageinrichtung gegenüber dem Träger 30 bewirken und diese in die Ausgangsstellung drücken. Die Airbageinrichtung kann mit elektrischen Kontaktierungen versehen sein, um beispielsweise ein Hupensignal auszulösen. In der Figur 1 ist gezeigt, dass die Federn 60 getrennt von der Vorrichtung zur Dämpfung von Schwingungen angeordnet sind, um die Dämpfungswirkung von der Krafteinleitungswirkung zu trennen.

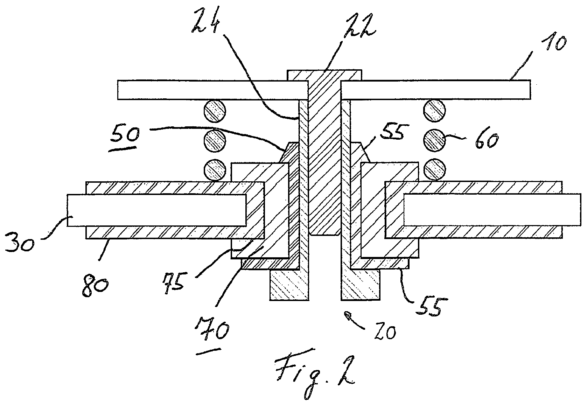

Eine Variante der Erfindung ist in der Figur 2 dargestellt, in der schematisch eine Airbageinrichtung 10 in Gestalt eines Teils eines Gehäuses gezeigt ist. Über einen Bolzen 22, der in einer Gleitbuchse 24 mit Innengewinde eingeschraubt ist, ist die Airbageinrichtung 10 an der Halteeinrichtung 20 gekoppelt. Die Gleitbuchse 24 ist längsverschieblich in der Führungsbuchse 50 gegen die Federkraft der Federn 60 gelagert und kann im dargestellten Ausführungsbeispiel entgegen der Federkraft nach unten verlagert werden. Die Führungsbuchse 50 weist am oberen und unteren Ende jeweils Formschlusselemente 55 in Gestalt von Vorsprüngen auf, die wiederum die Dämpfungsbuchse 70 sowohl in Richtung der Längsverlagerbarkeit der Gleitbuchse 24 als auch in radialer Richtung festlegt. Die Dämpfungsbuchse 70 weist Aufnahmeeinrichtungen 75 auf, die an ihrem Außenumfang angeordnet sind und eine umlaufende Nut bilden, in die der Träger 30 mit der Ummantelung 80 eingelegt ist.

Die Feder 60 ist als Druckfeder ausgebildet und um die Halteeinrichtung 20 herum angeordnet. Durch den Absatz in der Führungsbuchse 24 an dem dem Bolzen 22 gegenüberliegenden Ende wird verhindert, dass die Airbageinrichtung 10 weiter als es in der dargestellten Stellung verlagert wird. Die Ummantelung 80 kann an dem Träger 30 festgeklebt und auf andere Weise angeordnet sein, beispielsweise im Rahmen einer Umspritzung daran befestigt. Die Feder 60 selbst stützt sich auf der gegebenenfalls schwingungsdämpfenden und elektrisch isolierenden Ummantelung 80 ab, nicht jedoch an der Führungsbuchse 50 oder der Dämpfungsbuchse 70, um eine Schwingungseinleitung zu vermeiden.

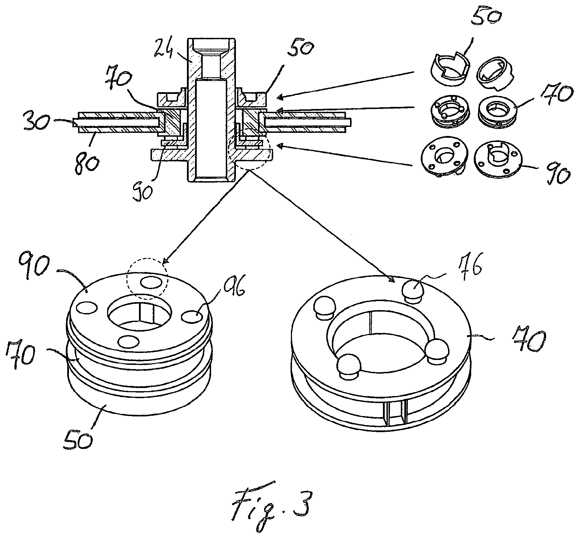

In der Figur 3 ist eine weitere Variante der Erfindung in einer schematischen Schnittdarstellung gezeigt, bei der an dem Träger 30 mit der Ummantelung die Dämpfungsbuchse 70 formschlüssig festgelegt ist. Die Dämpfungsbuchse 70 ist in der Führungsbuchse 50 gelagert. Unterhalb der Führungsbuchse 50 ist das Isolierelement 90 angeordnet, das einen L-förmigen Querschnitt aufweist, also eine senkrechte, zylindrische Wandung und einen horizontal daran abkragenden Absatz. An der Dämpfungsbuchse 70 sind Formschlusselemente 76 in Gestalt von in Axialrichtung orientierten Noppen angeordnet, auf die das Isolierelement 90 mit korrespondierend ausgebildeten Ausnehmungen 96 aufgesetzt werden, um eine Verdrehung des Isolierelementes 90 relativ zu der Dämpfungsbuchse 70 zu verhindern. Die Formschlusselemente 76 weisen einen Hinterschnitt auf, so dass das Isolierelement 90 rastend gehalten werden kann und eine Verlagerung weder in Axialrichtung noch in Umfangsrichtung stattfinden kann. Die Führungsbuchse wird in die Bohrung der Dämpfungsbuchse 70 eingepasst und führt die Halteeinrichtung 20, genauer gesagt die Gleitbuchse 24, relativ zu dem Träger 30. Das Isolierelement 90 kann ebenfalls eine Führungsfunktion wahrnehmen, da es dämpfungsgelagert an der Dämpfungsbuchse 70 festgelegt ist. Die Formschlusselemente 76 ragen im dargestellten Ausführungsbeispiel durch die Ausnehmungen 96 in dem Isolierelement 90 hindurch und stützen sich auf dem Flansch der Gleitbuchse 24 ab, so dass die Gleitbuchse 24 ebenfalls dämpfend gelagert ist. Im dargestellten Zustand ist die Gleitbuchse 24 über die Dämpfungsbuchse 70 an dem Träger 30 festgelegt, so dass es zu keinem unmittelbaren Kontakt zwischen dem Träger 30 und der Gleitbuchse 24 kommt, ohne das ein Dämpferelement zwischengeschaltet ist. Die Gleitbuchse 24 ist dadurch auch schwingungstechnisch von dem Isolierelement 90 entkoppelt. Die Dämpfung der Gleitbuchse 24 führt zu einer Verringerung der Geräuschentwicklung, da eine akustische Entkopplung durchgeführt wird, zumindest jedoch eine Weiterleitung von Schwingungen verringert wird.

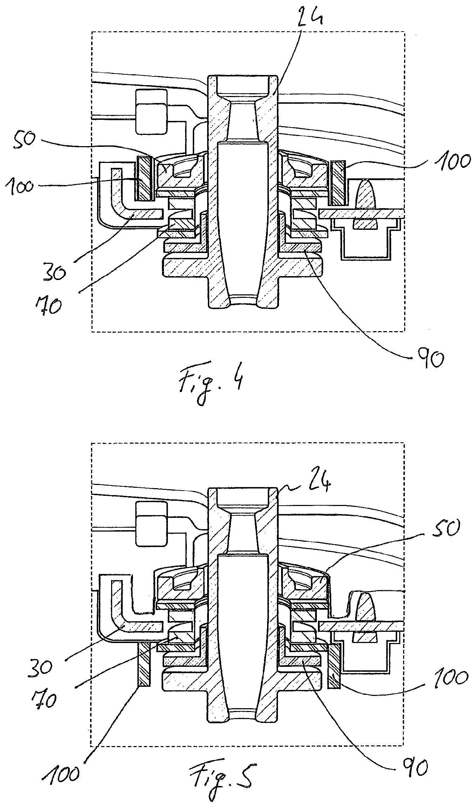

Eine weitere Variante der Erfindung ist in den Figuren 4 und 5 dargestellt, bei der die Gleitbuchse 24 in der Führungsbuchse 50, der Dämpfungsbuchse 70 und dem ummantelten Träger 30 gelagert ist. In der Figur 4 ist ein Anschlagelement 100 an der Oberseite angeordnet, um bei einer Verlagerung der nicht dargestellten Airbageinrichtung 10 in Richtung auf den Träger 30 eine zu starke Kompression der Federn 60 zu vermeiden und darüber hinaus eine Beschädigung entweder der Airbageinrichtung oder der Halteeinrichtung 20 zu verhindern. In der Figur 5 ist der Anschlag 100 auf der unteren, also der dem Airbag abgewandten Seite des Trägers 30 angeordnet, falls konstruktiv eine Verlagerung des Trägers nach unten vorgesehen sein sollte. Der Anschlag 100 kann als umlaufendes Ringelement ausgebildet sein, ebenso ist es möglich, dass der Anschlag 100 aus mehreren Komponenten besteht, die verhindern, dass eine Relativbewegung zwischen dem Airbag 10 und dem Träger über das vorbestimmte Maß hinaus erfolgt. Der Anschlag 100 ist vorzugsweise an dem Träger 30 oder der Umhüllung 80 angeordnet und der Träger 30 kann selbst als Hupenplatte, Lenkrad oder Teil eines Lenkrades ausgebildet sein.

## Patentansprüche

1. Vorrichtung zur Dämpfung von Schwingungen eines Airbags oder einer Airbageinrichtung (10) mit einer Halteeinrichtung (20) zur Befestigung des Airbags oder der Airbageinrichtung (10) an einem Träger (30), wobei die Halteeinrichtung (20) entgegen einer Federkraft verlagerbar an dem Träger (30) festgelegt istund zwischen der Halteeinrichtung (20) und dem Träger (30) eine Dämpfereinrichtung (70) angeordnet ist wobei die Halteeinrichtung (20) in einer an dem Träger (30) festgelegten Führungsbuchse (50) geführt und die Führungsbuchse (50) schwingungsgedämpft an dem Träger (30) gelagert ist, **dadurch gekennzeichnet, dass** zwischem dem Träger (30) und der Dämpfungsbuchse (70) eine an dem Träger (30) befestigbare Ummantelung (80) angeordnet ist.

2. Vorrichtung nach Anspruch 1 , **dadurch gekennzeichnet, dass** die Führungsbuchse (50) elektrisch isolierend ausgebildet ist.

3. Vorrichtung nach Anspruch 1 oder 2, **dadurch gekennzeichnet, dass** die Führungsbuchse (50) Formschlusselemente (55) an ihrem äußeren Umfang aufweist, in denen eine Dämpfungsbuchse (70) formschlüssig gehalten ist.

4. Vorrichtung nach Anspruch 3, **dadurch gekennzeichnet, dass** die Dämpfungsbuchse (70) an ihrem Außenumfang zumindest eine Aufnahmeeinrichtung (75) zur formschlüssigen Festlegung des Trägers (30) aufweist.

5. Vorrichtung nach einem der voranstehenden Ansprüche, **dadurch gekennzeichnet, dass** zwischen der Führungsbuchse (50) und der Dämpfungsbuchse (70) zumindest ein elektrisch isolierendes Element (90) angeordnet ist.

6. Vorrichtung nach Anspruch 5, **dadurch gekennzeichnet, dass** das elektrisch isolierende Element (90) und die Dämpfungsbuchse (70) formschlüssig in Radialrichtung und/oder Umfangsrichtung miteinander über Formschlusselemente (75, 95) gekoppelt sind.

7. Vorrichtung nach einem der voranstehenden Ansprüche, **dadurch gekennzeichnet, dass** eine Feder (60) zwischen dem Träger (30) und der Halteeinrichtung (20) angeordnet ist, die sich nicht auf der Führungsbuchse (50) oder schwingungsdämpfenden Elementen abstützt.

8. Vorrichtung nach einem der voranstehenden Ansprüche, **dadurch gekennzeichnet, dass** die Halteeinrichtung (20) eine Gleitbuchse (24) mit Innengewinde und einen Bolzen (22) aufweist.

9. Vorrichtung nach einem der voranstehenden Ansprüche, **dadurch gekennzeichnet, dass** ein in Verlagerungsrichtung der Halteeinrichtung (20) wirksamer Anschlag (100) vorgesehen ist.

10. Vorrichtung nach einem der voranstehenden Ansprüche, **dadurch gekennzeichnet, dass** der Träger (30) als Lenkrad ausgebildet ist.

## Claims

1. Device for damping oscillations of an airbag or of an airbag device (10) with a holding device (20) for fastening the airbag or the airbag device (10) to a carrier (30), wherein the holding device (20) is movably fixed on the carrier (30) counter to a spring force and a damping device (70) is arranged between the holding device (20) and the carrier (30), wherein the holding device (20) is guided in a guide sleeve (50) fixed on the carrier (30) and the guide sleeve (50) is supported on the carrier (30) with oscillation damping, **characterized by** that a jacketing (80) which can be fastened on the carrier (30) is arranged between the carrier (30) and the damping sleeve (70).

2. Device according to Claim 1, **characterized by** that the guide sleeve (50) is constructed to be electrically insulating.

3. Device according to claim 1 or 2, **characterized by** that the guide sleeve (50) comprises form-locking elements (55) on its outer circumference in which a damping sleeve (70) is positively held.

4. Device according to Claim 3, **characterized by** that the damping sleeve (70) comprises at least one receiving device (75) on its outer circumference for the positive fixing of the carrier (30).

5. Device according to one of the previous claims, **characterized by** that at least one electrically insulating element (90) is arranged between the guide sleeve (50) and the damping sleeve (70).

6. Device according to Claim 5, **characterized by** that the electrically insulating element (90) and the damping sleeve (70) are positively coupled to one another in the radial and/or the circumferential direction by form-locking elements (75, 95).

7. Device according to one of the previous claims, **characterized by** that a spring (60) is arranged between the carrier (30) and the holding device (20) which is not supported on the guide sleeve (50) or on oscillation-damping elements.

8. Device according to one of the previous claims, **characterized by** that the holding device (20) comprises a sliding sleeve (24) with the inner threading and a bolt (22).

9. Device according to one of the previous claims, **characterized by** that a stop (100) which is active in the shifting direction of the holding device (20) is provided.

10. Device according to one of the previous claims, **characterized by** that the carrier (30) is constructed as a guide wheel.

## Revendications

1. Dispositif d'amortissement des vibrations d'un coussin de sécurité gonflable ou d'un système de coussin de sécurité gonflable (10) comprenant un agencement de retenue (20) destiné à la fixation du coussin de sécurité gonflable ou du système de coussin de sécurité gonflable (10) à un support (30), l'agencement de retenue (20) étant attaché au support (30) de manière déplaçable contre une force de ressort et un agencement d'amortissement (70) étant disposé entre l'agencement de retenue (20) et le support (30), l'agencement de retenue (20) étant guidé dans une douille de guidage (50) attachée au support (30) et la douille de guidage (50) étant montée avec amortissement des vibrations sur le support (30), **caractérisé en ce qu'**entre le support (30) et la douille de guidage (70) est disposée une gaine (80) qui peut être fixée au support (30).

2. Dispositif selon la revendication 1, **caractérisé en ce que** la douille de guidage (50) est réalisée de manière électriquement isolante.

3. Dispositif selon la revendication 1 ou 2, **caractérisé en ce que** la douille de guidage (50) comporte des éléments de liaison par complémentarité de formes (55) sur sa périphérie extérieure, dans lesquels une douille d'amortissement (70) est maintenue par complémentarité de formes.

4. Dispositif selon la revendication 3, **caractérisé en ce que** la douille d'amortissement (70) comporte sur sa périphérie extérieure au moins un agencement de réception (75) pour l'attache par complémentarité de formes du support (30).

5. Dispositif selon l'une des revendications précédentes, **caractérisé en ce qu'**entre la douille de guidage (50) et la douille d'amortissement (70) est disposé au moins un élément électriquement isolant (90).

6. Dispositif selon la revendication 5, **caractérisé en ce que** l'élément électriquement isolant (90) et la douille d'amortissement (70) sont couplés l'un à l'autre par complémentarité de formes dans le sens radial et/ou dans le sens périphérique par le biais d'éléments de liaison par complémentarité de formes (75, 95).

7. Dispositif selon l'une des revendications précédentes, **caractérisé en ce qu'**entre le support (30) et l'agencement de retenue (20) est disposé un ressort (60), qui ne s'appuie pas sur la douille de guidage (50) ou des éléments d'amortissement des vibrations.

8. Dispositif selon l'une des revendications précédentes, **caractérisé en ce que** l'agencement de retenue (20) comporte une douille de glissement (24) avec filetage intérieur et un boulon (22).

9. Dispositif selon l'une des revendications précédentes, **caractérisé en ce qu'**une butée (100) active dans la direction de déplacement de l'agencement de retenue (20) est prévue.

10. Dispositif selon l'une des revendications précédentes, **caractérisé en ce que** le support (30) est réalisé sous la forme d'un volant.
